# EUROPEAN PATENT SPECIFICATION

(11) **EP 3 797 587 B1**
(45) Date of publication and mention of the grant of the patent: **26.07.2023**
(21) Application number: 20198465.5
(22) Date of filing: 25.09.2020
(51) Int. Cl.: A01M 1/14

(54) **ADHESIVE PLATE FOR INSECT CATCHING LAMPS**
KLEBEPLATTE FÜR INSEKTENFANGLAMPEN
PLAQUE ADHÉSIVE POUR LAMPES ANTI-INSECTES

(30) Priority: 26.09.2019 IT 201900017315
(43) Date of publication of application: 31.03.2021
(73) Proprietor: Fasmi Srl, 86012 Cercemaggiore (CB) (IT)
(72) Inventor: SPINA, Giuseppe, 86012 Cercemaggiore (CB) (IT)
(74) Representative: Fioravanti, Corrado

(56) References cited:
- EP-A1- 2 941 956
- WO-A1-98/42186
- DE-C- 374 805
- JP-A- 2014 096 997
- JP-A- 2018 027 028
- US-A1- 2013 318 854
- US-A1- 2019 261 616

## Description

*The present invention belongs to the field of entomological traps used in integrated pest management.*

*In particular, the invention relates to an innovative type of adhesive panel, which is usable in light traps for catching insects, with specific reference to flies.*

*Integrated pest control also known as IPM, from the English acronym of the expression Integrated Pest Management, consists of a practice, which is mainly developed in the sphere of crop protection, but which also applies to all domestic and industrial contexts or contexts where people gather, in which it is necessary to deal with the problem of pest control.*

*Substantially, it is a broad approach intended to emphasize the synergy of several disciplines and intervention measures in a global management aimed at preventing pest damage.*

*The main aim of such integrated management is to limit and not eradicate harmful organisms, such as, for example, pests, harmful insects, as well as rodents or fungi; in essence, the objective is to keep the populations of these organisms within a determined limit threshold, beyond which the same would create a financial loss.*

*According to this strategy, it is necessary to consider all of the techniques available for pest control by means of monitoring harmful populations and the availability of historic data and, successively, the integration of said control techniques with appropriate measures to discourage the development of pest populations and keep the use of pesticides and other interventions at acceptable levels.*

*Cognitive interventions play an essential role in the implementation of valid IPM plans. To this end, the aim of the monitoring is to identify the infesting species in question, estimate the density and population dynamics thereof, identify the critical points and assess the potential damage.*

*Furthermore, it also acts as a control instrument for verifying the success of any preventive and corrective action carried out. A rapid detection and identification of the pests is one of the main components of the Integrated Pest Management strategy for food companies.*

*If the intervention measures are applied promptly as a result of effective monitoring, they can have a deep impact both on the insect populations and on the populations of other arthropods and rodents.*

*The present invention belongs to the category of entomological traps, i.e. those devices capable of attracting and catching insects. More specifically, the invention relates to a new type of adhesive panel, which significantly increases the capacity capable of attracting and catching flies, when inserted into a light trap.*

*Light traps are particularly important among instruments for monitoring harmful populations and they represent the most commonly used instrument in the areas of producing and storing foodstuffs.*

*The importance of this instrument can also be seen in the numerous contributions made by scientific research, both in the understanding of the working and in the development and application of such light devices in all of the food chains.*

*Light traps are substantially based on the capacity to attract insects by means of the light emitted by one or more sources (preferably fluorescent tubes with emission peak in ultraviolet radiation).*

*Vision is known to be one of the most developed senses in flies: over half the head is covered by two large composite eyes and three oce77i. M. domestica adults use the light reflected by the environment during flight to search for food and to identify safe places and areas to settle.*

*The vision of colors is the capacity to distinguish the differences between different wavelengths and it is considered a prerogative of composite eyes, whereas ocelli (simple eyes) are considered capable of identifying differences in the intensity of the light. The light reflected by the environment stimulates the photoreceptors, triggering photo-transduction for the nervous system, which transmits such signals to the optic lobe of the brain for interpretation. The information thus received can influence individuals' behavior, for example, creating an attraction or repulsion towards a determined source.*

*In a fly's composite eyes, three different types of photoreceptors are present in each single ommatidium, referred to as R1-R6, R7 and R8. Each cell is capable of providing the insect with specific information. Receptors R1-R6 and R7 are sensitive to emission peaks close to 350 nm and 490 nm, while receptors R8 are sensitive to 490 nm. Pigments R7 and R8, located in the marginal-back part of the eye, allow M. domestica adults to detect polarized light. The light spectrum visible to flies is between 310 and 630 nm, however, the greatest attraction was observed at 350 nm.*

*Most of the light traps, which are commercially available at present, consist of fluorescent tubes, which can be either exposed to the sight of flying insects or hidden, or partially hidden, acting as an attraction for all arthropods with positive phototropism (i.e. attracted by the light). Instead, the catching action is carried out by a panel, preferably a rigid panel, such as, for example, made of cardboard or cellular plastic or rigid plastic, onto which a thin layer of adhesive is spread, in an almost homogenous manner, which is resistant to ultraviolet rays.*

*The types of adhesive plates, which are commercially available, are supplied mainly in yellow, exploiting the color's chromo-attractive capacity to give the trap maximum efficacy. Black adhesive panel versions also exist and are used to camouflage catches from onlookers, even though they are known to catch a lower quantity of insects than the yellow panels. This type of black panels is used mainly in the sector of catering or in establishments open to the public, to prevent people watching from being repulsed by the* insects being trapped.

The color of the panel can be homogenous or a grid can be present with a varying-sized mesh, generally 2.5x2.5 cm (black, white or gray on plates with a yellow background and white on panels with a black background), which has the object of facilitating the count of the insects caught and which has no impact on the catches.

A small production of panels with a white background is also present on the market, especially for productions of an economical type (the cost of painting the cardboard is not considered), which are less attractive than the yellow panels.

The distribution of the adhesive on the surface of the cardboard is generally uniform, although in some types of panels areas are left devoid of adhesive close to the pre-cuts and die-cuttings, to prevent the potentially-shaped edge of the panel from sticking to the light trap.

In general, known devices have the problem of a not maximized insect capture since only assigned to positive phototropism of insects, which is increased, in the case of a yellow panel, by the chromo-attractive feature of the yellow color.

JP 2018 027028 A discloses an insect attracting device having UV light sources and a reflector. The surface of the reflector may be coated with a general paint such as white paint. The reflector may be provided with parts having different colours, for example a white and black striped pattern is may be used. A transparent adhesive, such as a transparent film, may be attached to the reflector in order to capture insects. After insects are captured, the transparent film is peeled off and discarded.

It is the principal aim of the present invention to maximize the capture of insects by means of an improved adhesive panel.

This has been achieved by means of the realization of an adhesive panel capable of attracting more insects, substantially made up of an adhesive panel with a white background, having an elevated *degree of brilliance, in which vertical adhesive strips are deposited, alternating with spaces devoid of adhesive.*

*A better understanding of the invention will be achieved by means of the following detailed description and with reference to the accompanying figures, which show a preferred embodiment thereof given purely by way of a non-limiting example.*

*In the drawings:*
*Figure 1* *shows a light trap onto which a yellow commercial adhesive panel is mounted.*
*Figure 2* *shows a commercial adhesive panel evidencing the zone comprised between the die-cutting, in which the adhesive is applied.*
*Figure 3* *shows the rendering of a preferred embodiment of the invention made up of the adhesive panel in which the vertical adhesive strips are visible, alternating with zones devoid of adhesive.*
*Figure 4* *shows a prototype of the invention.*

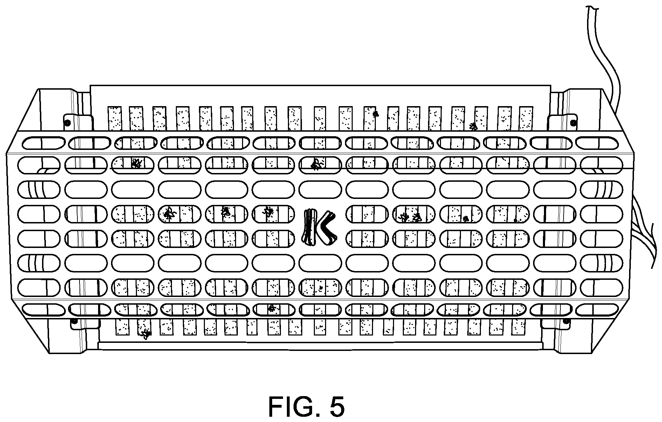

*Figure 5* *shows a light trap in which the panel according to the invention is installed and in which the increased reflecting effect of the latter is visible.*

*As said previously, the present invention consists of an improved adhesive panel, suitable for being used as a catching element in common light traps.*

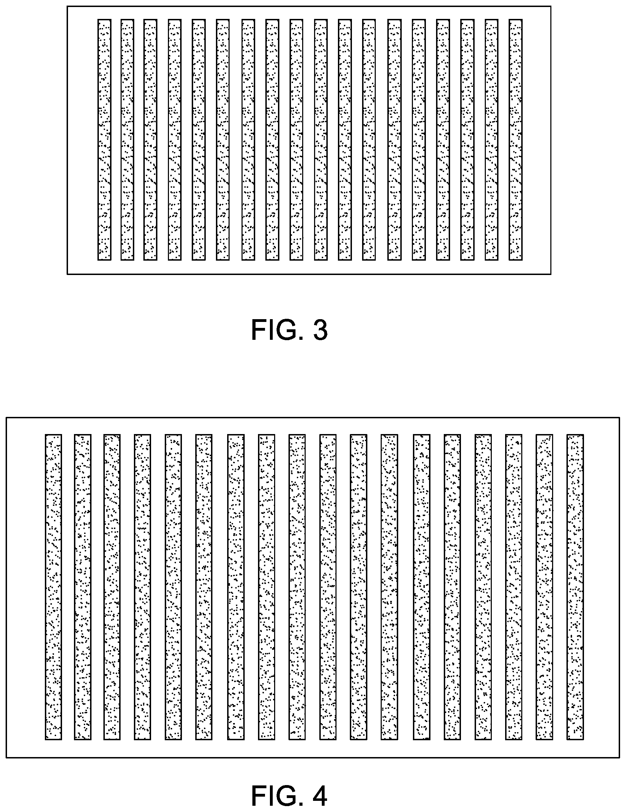

*According to the invention, said panel has* a *white background with an elevated degree of brilliance (equal to 95% according to the IS0 standard 2470-1:2009) and comprises vertical adhesive strips, alternating with spaces devoid of adhesive, as shown in* *figure 3**.*

*In a preferred, non-limiting embodiment of the invention, adhesive bands are provided on said panel with a width of 1.5 cm, alternating with spaces devoid of adhesive with a width of 1 cm (**figure 4**).*

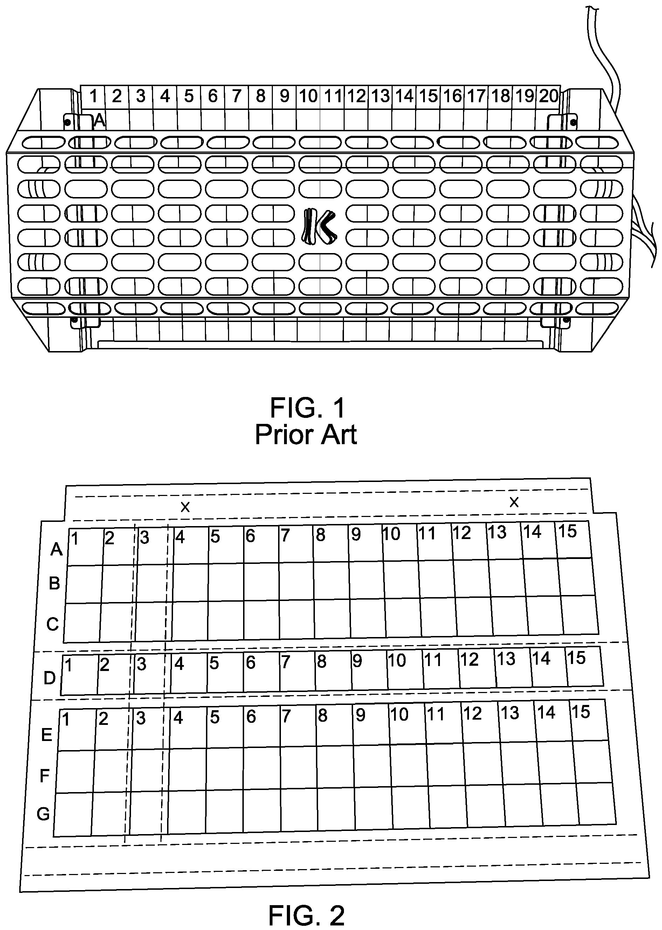

*Advantageously, in trials, this configuration provided an increase in the capture of insects between 89% and 185% with respect to commercial panels with a yellow background similar to those shown in* *figure 1**.*

*Unlike commercial panels, in particular, with reference to devices using a yellow panel, the increased capturing capacity is due, first and foremost,* to *the elevated reflection of the ultraviolet rays and of the visible spectrum of light radiation generated by the white background with an elevated degree of brilliance, which significantly increases the brilliance of the trap.*

*In fact, the white background with elevated brilliance allows all of the light coming from the source and incident thereon to be reflected, minimizing the portion absorbed thereof unlike the colored panels, which are tendentially opaque and absorb most of the light, which lights them, reflecting a relatively small part thereof.*

*A further feature of the invention, which contributes to increasing the capturing capacity, consists of the "zebra-striped" effect generated by the alternation of high reflectivity zones (parts devoid of adhesive) with low reflectivity zones (adhesive strips), which create a light*/*dark effect.*

*This makes it possible to indulge the fly's natural propensity to settle close to the border line between high reflectivity zones and low reflectivity zones on the opaquest part.*

*Another feature of the invention consists of providing adhesive strips arranged perpendicularly to the fluorescent tube: such orientation creates a very broad reflecting grid, which allows a77 of the receptors present in the fly's eye to be struck in a reflected manner.*

*In essence, the increased capturing capacity is due both to the increased reflecting capacity of the adhesive panel with an elevated degree of brilliance, which generates a general increase in the brilliance of the trap, and the advantageous arrangement of the adhesive strips, which, alternating with zones devoid of adhesive, contribute to optimizing the increased brilliance, generating contrasts of lit and non-lit zones, which allow insects to be attracted more easily, stimulating all of the receptors present in a fly's eye and indulging the fly's natural propensity to settle close to the border lines between lit and non-lit zones.*

*Finally, it is worth noting that* - as *an alternative to the fluorescent tubes* - *LED light sources or light sources of another type can be used. Furthermore, the background of the adhesive panel can be white, as described thus far in relation to a preferred embodiment of the invention, as well as si7ver, or of another type adapted to reflect the light.*

## Claims

1. *An adhesive plate or panel for insect catching lamps, in particular for flies, adapted to be used as a catching element in common light traps provided with at least one fluorescent tube or LED sources, having an emission peak in the UV component, **characterized in that** it comprises a background with an elevated degree of brilliance, such as, for example, white or silver,* the background being *configured to effectively reflect light radiation in the spectrum of UV light between 310 and 400nm, on which adhesive strips are present, parallel to one another, alternating with spaces devoid of adhesive.*

2. *A plate or panel according to claim 1, **characterized in that** said background has a degree of brilliance equal to 95% according to the IS0 standard 2470-1:2009.*

3. *A plate or panel according to claim 1 or 2, **characterized in that** said adhesive strips have a width of 1.5 cm, alternating with spaces devoid of adhesive with a width of 1 cm.*

4. *A plate or panel according to one or more of the preceding claims, **characterized in that** said adhesive strips, alternating with spaces devoid of adhesive, are configured to create a "zebra-striped" light*/*dark effect, generated by the alternation of high reflectivity zones, devoid of adhesive, with low reflectivity zones, adhesive strips; thus succeeding in indulging a fly's natural propensity to settle close to the border line between the high reflectivity zones and the low reflectivity zones, on the most opaque part.*

5. *A light trap comprising a fluorescent tube or LED sources, and at least one plate or panel according to one or more of claims 1 to 4, **characterized in that** said adhesive strips are arranged perpendicularly to the direction of distribution of the light, in order to create a reflecting grid with elevated efficiency in the Ultraviolet light fraction (310-400 nm) produced by artificial sources placed in the light traps, such as, for example, fluorescent tubes with mercury vapors for producing UV or UV LED; said grid being very broad to allow all of the receptors present in a fly's eye to be struck in a reflected manner.*

6. *A light trap comprising a fluorescent tube or LED sources, and at least one plate or panel according to one or more claims from 1 to 4, **characterized in that** the areas devoid of adhesive have a much wider reflection of the artificial light radiation produced with UV LED or UV light fluorescent tubes, and visible to flies, comprising a radiation between 310 and 630 nm; thus obtaining a significant increase in the brilliance of the entire light trap-adhesive catching panel complex.*

## Patentansprüche

1. Klebeplatte oder -panel für Lampen zum Fangen von Insekten, insbesondere von Fliegen, die/das zur Verwendung als Fangvorrichtung in gängigen Lichtfallen, die mit mindestens einer Leuchtstoffröhre oder LED-Quellen mit einer Emissionsspitze in der UV-Komponente versehen sind, ausgelegt ist, **dadurch gekennzeichnet, dass** sie/es einen Hintergrund mit erhöhtem Leuchtkraftgrad, wie z.B. weiß oder silbern, aufweist, wobei der Hintergrund derart ausgestaltet ist, dass er Lichtstrahlung im UV-Licht-Spektrum zwischen 310 und 400 nm effektiv reflektiert, wobei auf dem Hintergrund parallel zueinander angeordnete Klebestreifen vorhanden sind, die mit klebemittelfreien Bereichen abwechseln.

2. Platte oder Panel nach Anspruch 1, **dadurch gekennzeichnet, dass** der Hintergrund einen Leuchtkraftgrad hat, der 95% gemäß der ISO-Norm 2470-1:2009 entspricht.

3. Platte oder Panel nach Anspruch 1 oder 2, **dadurch gekennzeichnet, dass** die Klebestreifen eine Breite von 1,5 cm haben und mit klebemittelfreien Bereichen mit einer Breite von 1 cm abwechseln.

4. Platte oder Panel nach einem oder mehreren der vorangehenden Ansprüche, **dadurch gekennzeichnet, dass** die Klebestreifen, welche mit klebemittelfreien Bereichen abwechseln, dazu ausgestaltet sind, einen zebrastreifenartigen Hell-/Dunkeleffekt zu erzeugen, der durch das Abwechseln von klebemittelfreien Zonen mit hohem Reflexionsgrad und Klebestreifen aufweisenden Zonen mit niedrigem Reflexionsgrad entsteht, wodurch erreicht wird, der natürlichen Neigung von Fliegen, sich auf dem lichtundurchlässigsten Abschnitt in der Nähe der Grenzlinie zwischen den Zonen mit hohem Reflexionsgrad und den Zonen mit niedrigem Reflexionsgrad niederzulassen, Rechnung zu tragen.

5. Lichtfalle, aufweisend eine Leuchtstoffröhre oder LED-Quellen, und mindestens eine Platte oder ein Panel nach einem oder mehreren der Ansprüche 1 bis 4, **dadurch gekennzeichnet, dass** die Klebestreifen senkrecht zur Verteilungsrichtung des Lichts angeordnet sind, um ein reflektierendes Gitter mit erhöhter Effizienz im ultravioletten Lichtanteil (310-400 nm) zu schaffen, welches durch in den Lichtfallen platzierte künstliche Quellen erzeugt wird, wie z.B. Leuchtstoffröhren mit Quecksilberdämpfen zum Erzeugen von UV oder UV-LEDs, wobei das Gitter sehr breit ist, um zu ermöglichen, dass sämtliche im Auge einer Fliege vorhandene Rezeptoren reflektierend angestrahlt werden.

6. Lichtfalle, aufweisend eine Leuchtstoffröhre oder LED-Quellen, und mindestens eine Platte oder ein Panel nach einem oder mehreren der Ansprüche 1 bis 4, **dadurch gekennzeichnet, dass** die klebemittelfreien Bereiche eine viel breitere Reflexion der mit den UV-LEDs oder den UV-Licht-Leuchtstoffröhren erzeugten und für Fliegen sichtbaren Kunstlichtstrahlung haben, und zwar mit einer Strahlung zwischen 310 und 630 nm, wodurch eine signifikante Zunahme der Leuchtkraft des gesamten Klebe-Lichtfallen-Fangpanelkomplexes erzielt wird.

## Revendications

1. Plaque ou panneau adhésif pour des lampes de capture d'insectes, en particulier pour des mouches, adapté pour être utilisé comme élément de capture dans des pièges lumineux communs dotés d'au moins un tube fluorescent ou de sources à DEL, ayant un pic d'émission dans la composante UV, **caractérisé en ce qu'**il comprend un arrière-plan avec un degré élevé de brillance, tel que, par exemple, blanc ou argenté, l'arrière-plan étant configuré pour réfléchir efficacement un rayonnement lumineux dans le spectre de la lumière UV entre 310 et 400 nm, sur lequel des bandes adhésives sont présentes, parallèles les unes aux autres, alternant avec des espaces dépourvus d'adhésif.

2. Plaque ou panneau selon la revendication 1, **caractérisé en ce que** ledit arrière-plan a un degré de brillance égal à 95 % selon la norme ISO 2470-1:2009.

3. Plaque ou panneau selon la revendication 1 ou 2, **caractérisé en ce que** lesdites bandes adhésives ont une largeur de 1,5 cm, alternant avec des espaces dépourvus d'adhésif avec une largeur de 1 cm.

4. Plaque ou panneau selon une ou plusieurs des revendications précédentes, **caractérisé en ce que** lesdites bandes adhésives, alternant avec des espaces dépourvus d'adhésif, sont configurées pour créer un effet clair/sombre « zébré », généré par l'alternance de zones à haute réflectivité, dépourvues d'adhésif, avec des zones à faible réflectivité, des bandes adhésives ; parvenant ainsi à suivre la propension naturelle d'une mouche à se poser près de la bordure entre les zones à haute réflectivité et les zones à faible réflectivité, sur la partie la plus opaque.

5. Piège lumineux comprenant un tube fluorescent ou des sources à DEL, et au moins une plaque ou un panneau selon une ou plusieurs des revendications 1 à 4, **caractérisé en ce que** lesdites bandes adhésives sont agencées perpendiculairement à la direction de distribution de la lumière, afin de créer une grille réfléchissante avec une efficacité élevée dans la fraction de la lumière ultraviolette (310 à 400 nm) produite par des sources artificielles placées dans les pièges lumineux, tels que, par exemple, des tubes fluorescents avec des vapeurs de mercure pour produire des UV ou des DEL UV ; ladite grille étant très large pour permettre à tous les récepteurs présents dans l'oeil d'une mouche d'être frappés d'une manière réfléchie.

6. Piège lumineux comprenant un tube fluorescent ou des sources à DEL, et au moins une plaque ou un panneau selon une ou plusieurs des revendications 1 à 4, **caractérisé en ce que** les régions dépourvues d'adhésif ont une beaucoup plus large réflexion du rayonnement lumineux artificiel produit avec des DEL UV ou des tubes fluorescents à lumière UV, et visible pour les mouches, comprenant un rayonnement entre 310 et 630 nm ; obtenant ainsi une augmentation importante de la brillance du complexe piège lumineux et panneau de capture adhésif entier.
